# FASCICULE DE BREVET EUROPEEN

(11) **EP 2 222 565 B1**
(45) Date de publication et mention de la délivrance du brevet: **03.05.2017**
(21) Numéro de dépôt: 08853499.5
(22) Date de dépôt: 21.11.2008
(51) Int. Cl.: B64G 1/14, F02K 9/90, F42B 10/62, F42B 10/66

(54) **DISPOSITIF D'ARRIÈRE CORPS D'ENGIN SPATIAL**
HECKKÖRPERVORRICHTUNG FÜR RAUMFAHRZEUG
SPACECRAFT AFTERBODY DEVICE

(30) Priorité: 29.11.2007 FR 0759434
(43) Date de publication de la demande: 01.09.2010
(73) Titulaire: Airbus Defence and Space SAS, 78130 Les Mureaux (FR)
(72) Inventeur: PRAMPOLINI, Marco, 78240 Chambourcy (FR)
(74) Mandataire: Ipside
(86) Numéro de dépôt international: PCT/EP2008/066029
(87) Numéro de publication internationale: WO 2009/068488

(56) Documents cités:
- DE-B- 1 288 447
- GB-A- 1 243 641
- JP-A- H06 123 599
- US-A- 3 432 125
- US-B1- 6 745 979

## Description

La présente invention concerne un dispositif d'arrière corps d'engin spatial notamment adapté à diminuer la traînée aérodynamique de l'engin en phase de vol atmosphérique.

Elle trouve particulièrement son application pour les véhicules spatiaux qui comportent une motorisation aérienne classique pour le vol atmosphérique et une propulsion fusée pour le vol hors atmosphère.

On appelle traînée de culot la résistance au mouvement d'un véhicule due à sa section arrière.

Les écoulements de fluide qui ont du mal à suivre les profils arrières des véhicules en mouvement deviennent turbulents derrière le véhicule ce qui réduit la pression à l'arrière du véhicule et crée une forte résistance à l'avancement du véhicule.

Il existe des solutions passives réduisant la traînée arrière des véhicules et notamment il est connu de réaliser un profil arrière de véhicule en cône en utilisant une vessie gonflable comme par exemple décrit dans le document DE 41 01 960, d'ajouter des profils de déviation de flux comme décrit par exemple dans le document EP 0 273 850, un ou des appendices annulaires comme dans le document US 6 297 486, des déflecteurs latéraux comme dans le document US 6 926 345.

D'autres réalisations sont basées sur des moyens actifs tels que des volets mobiles comme décrit dans le document US 4 411 399 ou une injection de fluide à l'arrière du véhicule pour y combler la dépression.

Les véhicules aériens propulsés par réacteurs présentent une tuyère d'éjection des gaz et les réacteurs ne créent que peu de traînée du fait que le jet des gaz éjectés participe au profil aérodynamique de l'engin.

Par contre un moteur inutilisé crée énormément de traînée (jusqu'à un tiers de la traînée totale de l'engin).

C'est pour cela par exemple que la navette spatiale américaine actuellement en service est munie, lorsqu'elle est convoyée par avion, d'un capot arrière conique masquant les tuyères de ses moteurs fusées.

Un tel capot n'est par contre pas utilisé lors d'un lancement de cette navette du fait qu'il serait nécessaire de le larguer avant l'allumage du moteur fusée ce qui obligerait à concevoir un dispositif de largage pesant et assurant qu'aucun débris ne puisse endommager les moteurs de la navette ou les propulseurs d'appoint largables (boosters selon la terminologie anglo-saxonne).

Il en serait de même pour un avion spatial pour lequel l'opération de largage resterait une opération risquée.

De même, l'usage de dispositifs actifs à injection de fluide sur un avion spatial nécessiterait d'embarquer le fluide dans le véhicule ce qui diminuerait sa charge utile.

Par ailleurs, dans le domaine de la propulsion, il est connu d'équiper des moteurs à turbine de dispositifs actifs de déflection de flux pour orienter le jet des gaz propulsifs. Le document US 2006/0150612 A1 est un exemple de tels dispositifs.

Cette technique n'est toutefois pas utilisée pour les moteurs fusées pour lesquels on préfère orienter la tuyère pour corriger la trajectoire de l'engin.

De même on connaît des dispositifs aérofreins comportant des volets intégrés dans les sorties de réacteurs d'aéronefs et se déployant pour freiner l'aéronef. Le document US 5 120 005 concerne de tels dispositifs combinant des volets s'écartant à l'arrière du moteur et des volets convergeant dans le flux de sortie du réacteur pour casser la poussée de du moteur.

Le document FR 2 705 739 décrit pour sa part un dispositif de réglage du diamètre de la section de sortie d'un divergent de moteur fusée pour adapter le divergent aux conditions ambiantes variables du vol.

Ce dispositif ne fait varier que le diamètre annulaire de la sortie et la forme des parois en regard du divergent selon une symétrie axiale par rapport à l'axe du divergent.

Pour ce qui concerne la stabilisation d'un engin tracté par accroissement de sa traînée, il est connu du document US 5 871 173 de disposer des ailettes se déployant à l'arrière de l'engin comme des branches d'un parapluie.

Le document US3432125, qui est considéré comme l'état de la technique le plus proche, divulgue un engin spatial avec un carénage segmenté escamotable qui se déplie pour former une structure de réduction de traînée aérodynamique.

Le cas particulier d'un engin spatial adapté au vol atmosphérique et propulsé par réacteurs et adapté au vol hors atmosphère propulsé par un moteur fusée conduit à des exigences contradictoires en terme de performances.

En vol atmosphérique de type aéronautique, on recherche une traînée minimale, donc en particulier une section de culot réduite au maximum alors qu'en vol spatial, on souhaite une section de sortie tuyère moteur fusée importante, néfaste à la réduction de la traînée de culot.

La présence d'une propulsion par fusée pose donc problème en vol atmosphérique, car elle crée beaucoup de traînée du fait de la section de la tuyère qui est large et forme une coupe droite à l'arrière de l'appareil.

La présente invention propose un dispositif d'arrière corps d'engin spatial avec les caractéristiques techniques de la revendication 1 et un procédé de correction de trajectoire d'un avion spatial avec les étapes de la revendication 12 La présente invention a pour but de réaliser un dispositif de réduction de traînée actif et manoeuvrable pour engin spatial, agencé pour assurer une fonction supplémentaire à la simple fonction de capotage de l'arrière du véhicule dans des phases de vol, telles que la montée atmosphérique, où le moteur fusée est inutilisé.

Selon l'invention, le dispositif est ainsi agencé pour participer au pilotage de l'engin en sorte de valoriser ce dispositif et d'en compenser son poids en l'utilisant pour le freinage et le pilotage de l'engin en particulier dans des phases de vol de retour atmosphérique.

Le dispositif de l'invention a dans ce cas pour avantage de permettre une simplification et une réduction de la masse des dispositifs de pilotage d'un avion spatial, ces dispositifs de pilotage ne devant plus être conçus pour pouvoir assurer le freinage aérodynamique de l'avion.

Pour ce faire, la présente invention prévoit un dispositif d'arrière corps d'engin spatial pourvu d'au moins un moteur fusée à l'arrière de l'engin caractérisé en ce qu'il comporte au moins un élément de capot manoeuvrable adapté à prendre une première position, de masquage et de réduction de la traînée arrière de l'engin, où il prolonge le fuselage de l'engin autour d'au moins une partie d'une tuyère du moteur fusée de l'engin et s'étend au delà de l'arrière du fuselage de l'engin, et à prendre une seconde position entièrement déployée, d'accroissement de traînée aérodynamique de l'engin.
la présente invention réalise ainsi un dispositif de réduction de traînée actif pour engin spatial, dont le surcroît de masse est compensé en en lui faisant remplir des fonctions d'aide au pilotage, pour la majeure partie des étapes de vol hors atmosphère ou de retour et en particulier, des fonctions aérodynamiques quand le moteur fusée est éteint, des fonctions propulsives quant le moteur fusée est en marche.

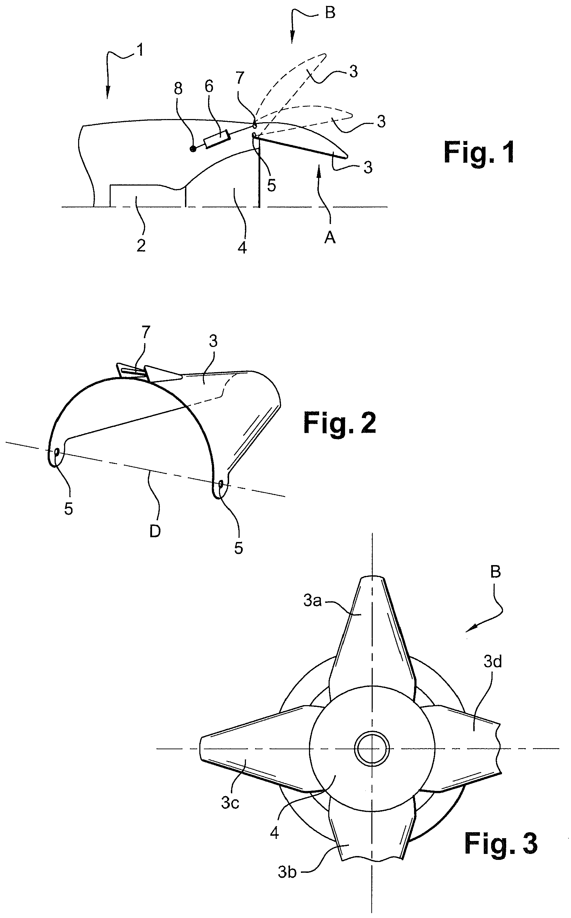

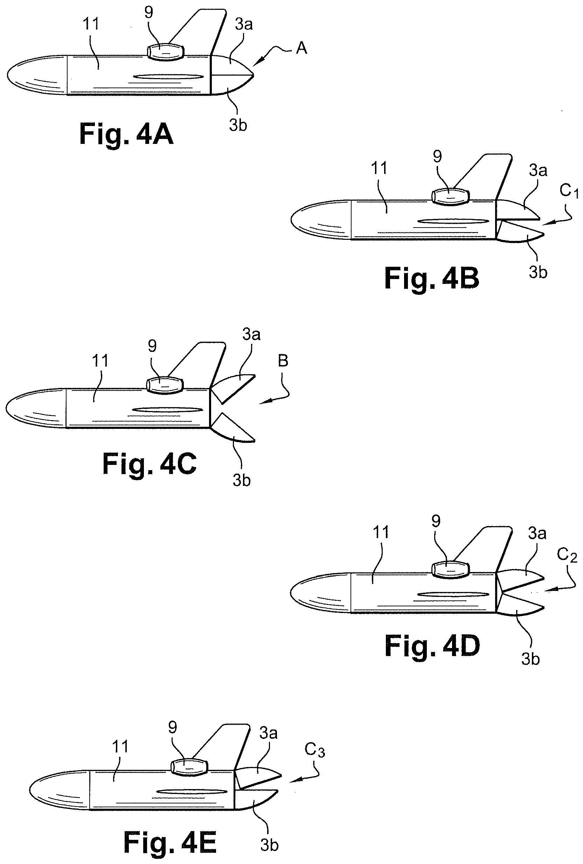

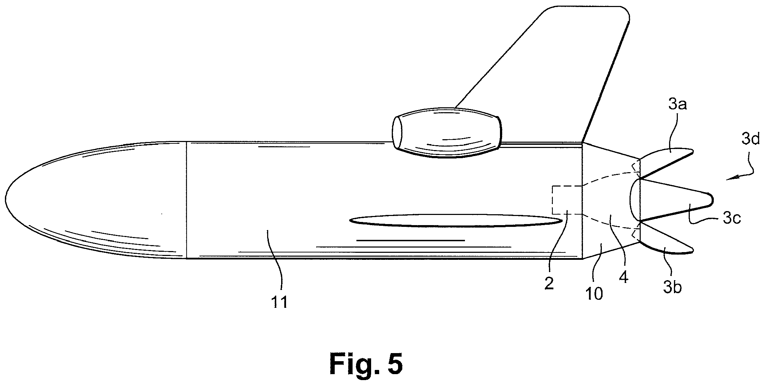

D'autres caractéristiques et avantage de l'invention seront apparents à la lecture de la description qui suit d'un exemple de réalisation non limitatif de l'invention en référence aux figures qui représentent:
en figure 1: une vue schématique de côté en coupe de l'arrière d'un engin spatial équipé du dispositif de l'invention,
en figure 2: une vue en perspective d'un élément de capot manoeuvrable du dispositif de l'invention,
en figure 3: une vue de derrière d'un engin spatial équipé du dispositif de l'invention,
aux figures 4A à 4E: des vues schématiques de côté d'un aéronef équipé du dispositif de l'invention selon plusieurs configurations de vol.
en figure 5: une vue de côté en transparence de l'avion spatial de la figure 3.

L'invention s'applique particulièrement à un engin spatial dont le moteur fusée n'est pas utilisé pendant des phases de vol atmosphérique et crée une traînée aérodynamique importante freinant l'engin et imposant un accroissement de la poussée nécessaire au décollage à la montée de l'engin dans l'atmosphère.

Elle s'applique particulièrement à un engin tel qu'une navette spatiale dont le décollage et la phase de vol en atmosphère, ou la majeur partie de cette phase, sont réalisés avec des moyens propulsifs autres que le moteur fusée de l'engin.

Elle s'applique par exemple à un engin spatial qui va être amené à une altitude de lancement par un avion porteur, à un engin spatial propulsé par des propulseurs auxiliaires largables pour son décollage et sa montée atmosphérique, à un engin spatial tel qu'un véhicule suborbital de type avion spatial où la première partie de la trajectoire est assurée par une propulsion de type aéronautique avec des moteurs fonctionnant avec l'oxygène de l'air et des plans sustentateurs, avant de passer à une propulsion de type fusée.

L'exemple représenté dans les figures correspond à ce dernier type de véhicule équipé de ses propres moteurs atmosphériques 9 représentés aux figures 4A à 4E et pourvu d'au moins un moteur fusée 2 muni d'une tuyère 4 disposée à l'arrière de l'engin comme représenté à la figure 1.

Le dispositif d'arrière corps d'engin spatial 1 de l'invention à pour première fonction de masquer la tuyère 4 dans des phases de vol atmosphérique de l'engin où le moteur fusée n'est pas utilisé.

Pour ce faire, il comporte au moins un élément de capot dont un exemple de réalisation est donné aux figures 1 et 2 sous forme d'un panneau de profil conique 3.

Pour complètement masquer la tuyère 4 et donner une forme aérodynamique à l'arrière du fuselage, l'élément de capot comporte préférablement plusieurs panneaux 3a, 3b, 3c, 3d disposés en prolongement du fuselage et s'étendant au delà de l'arrière du fuselage de l'engin pour former une coquille autour de la tuyère dans une position A de masquage de la tuyère.

Le ou les éléments de capot sont manoeuvrables séparément et adaptés à prendre la première position A, de masquage et de réduction de la traînée arrière de l'engin, où le capot est refermé et prolonge le fuselage de l'engin autour d'au moins une partie de la tuyère 4 du moteur fusée de l'engin et s'étend au delà de l'arrière du fuselage de l'engin, et à prendre une seconde position entièrement déployée B, d'accroissement de traînée aérodynamique de l'engin.

Dans cette seconde position, la tuyère est découverte pour permettre au moteur fusée de fonctionner et au jet propulsif de s'épanouir.

Cette position est représentée à la figure 3 dans le cadre d'un exemple de réalisation pour lequel le dispositif comporte quatre volets 3a, 3b, 3c, 3d dont deux se déploient dans un plan vertical et deux se déploient dans un plan horizontal.

Comme représenté à la figure 1, les éléments de capot 3 prolongeant le fuselage de l'engin sont articulés sur le fuselage par des moyens de fixation rotative 5.

L'articulation de chaque élément est disposée de telle sorte qu'il puisse tourner autour d'un axe D comme représenté à la figure 2.

Pour pouvoir ouvrir et fermer les éléments de capot 3, 3a, 3b, 3c, 3d, et les rendre manoeuvrables par rapport au fuselage, ils sont raccordés à ce dernier au moyen d'un vérin 6 fixé sur l'élément de capot par une première liaison rotative 7 et sur le fuselage par une seconde liaison rotative 8.

La liaison rotative 7 est décalée perpendiculairement à l'axe D de rotation de l'élément pour pouvoir manoeuvrer les panneaux.

Selon une caractéristique avantageuse de l'invention, au moins une partie de l'élément de capot 3, 3a, 3b, 3c, 3d est continûment manoeuvrable à l'aide du vérin 6, entre la position de masquage et de réduction de traînée A et la position entièrement déployée B, selon des positions intermédiaires C₁, C₂, C₃ de correction de trajectoire de l'engin.

En particulier, selon l'exemple représenté aux figures 4A à 4E, l'élément de capot comporte au moins un panneau généralement supérieur 3a et un panneau généralement inférieur 3b adaptés à être manoeuvrés séparément et à réaliser un contrôle de l'engin en cabrage et en piqué.

Dans le cadre de l'exemple de la figure 2, l'élément de capot comporte au moins deux panneaux généralement latéraux 3c, 3d adaptés à réaliser un contrôle de l'engin en lacet

L'élément de capot comporte dans ce dernier cas quatre panneaux 3a, 3b, 3c, 3d disposés en pétales se refermant autour de la tuyère 4 de l'engin et permettant selon leur déploiement de corriger la trajectoire de l'engin notamment lors de sa rentrée dans l'atmosphère moteur fusée 2 éteint.

On détaille ci-dessous en référence aux figures 4A à 4E le cas d'un engin spatial constitué par un avion spatial 11 pourvu de moteurs atmosphériques 9 pour les phases de vol atmosphérique de l'avion et pourvu d'un dispositif d'arrière corps comportant un élément de capot constitué de deux volets 3a, 3b se manoeuvrant séparément dans un plan vertical pour masquer ou découvrir la tuyère du moteur fusée.

Une telle configuration permet de mettre en oeuvre un procédé de correction de trajectoire d'un avion spatial 11 selon lequel on corrige la trajectoire de l'avion en manoeuvrant au moins un élément de capot 3a, 3b du dispositif selon des positions intermédiaires C₁, C₂, C₃ entre une position de masquage de la tuyère du moteur fusée de l'avion A et une position entièrement déployée B de freinage aérodynamique de l'avion.

Il est à noter que les exemples des figures 4A à 4E sont décrits dans le cas d'un capot en deux parties, l'une supérieure et l'une inférieure sont transposables au cas où le dispositif comporte quatre panneaux comme représenté à la figure 5, deux panneaux 3a, 3b se manoeuvrant séparément dans un plan vertical et deux panneaux 3c, 3d se manoeuvrant séparément dans un plan horizontal, ces derniers fonctionnant selon le principe de l'invention ajoutant un contrôle en lacet.

La figure 4A correspond à la position de masquage A qui permet une réduction de la traînée de culot et une diminution de charge aérodynamiques sur la tuyère. Dans le cas d'un avion spatial elle est utilisée lors de la montée aéronautique montée pendant laquelle l'avion est en pilotage atmosphérique.

Pour un étage de propulseur largable ou un propulseur auxiliaire largable équipé du dispositif de l'invention, cette position peut être utilisée lors de la récupération de l'étage ou propulseur ou, dans le cas d'un lanceur réutilisable pour la phase de croisière de retour vers base de lancement.

Dans cette position les deux ou quatre pétales constitués par les panneaux 3a, 3b sont naturellement refermés pour minimiser la traînée et protéger le moteur fusée.

La figure 4B correspond à une contribution des panneaux 3a, 3b au pilotage haute incidence.

On est en position haute incidence à haute altitude lors d'une rentrée, de façon à augmenter la traînée et donc accroître le freinage de l'appareil dans une atmosphère encore très raréfiée, que ce soit pour un avion spatial ou pour la récupération d'un étage de propulseur largable ou d'un lanceur réutilisable.

La position à haute incidence crée le freinage de l'aéronef et le volet inférieur sert dans cette configuration à équilibrer la position et stabiliser l'engin dans la position à haute incidence en reculant le centre de poussée par aérofreinage.

On équilibre la position haute incidence par l'ouverture ou la fermeture du pétale inférieur dans des positions intermédiaires entre la position de masquage et la position entièrement déployée.

La figure 4C correspond à des positions d'aérofreinage et de stabilisation au voisinage d'une attitude d'incidence nulle et/ou de dérapage nul.

Dans cette position on ouvre tous les pétales, plus ou moins selon les conditions de vitesse et le besoin de freinage. L'ouverture est alors régulée et pilotée à proximité de la position entièrement déployée.

Ce mode de fonctionnement est utilisé en particulier lors de l'approche finale pour un avion spatial ou un lanceur réutilisable. Il s'agit alors de contrôler la vitesse en plané.

Un freinage aérodynamique plus ou moins fort est obtenu en déployant les pétales plus ou moins entre la position de la figure 4A et celle de la figure 4C.

Il est utilisable aussi au passage trans-sonique lors de la rentrée d'un véhicule à portance nulle comme un étage de propulseur largable ou un lanceur réutilisable, ou dans le cas d'un avion spatial à aile droite.

Il est aussi utilisable lors de mise en sécurité en cas d'incidents en phase propulsée d'un avion spatial.

La figure 4D correspond à une position intermédiaire d'augmentation de la poussée en mode fusée.

Dans ce mode de fonctionnement, l'élément de capot 3, 3a, 3b, 3c, 3d est manoeuvrable entre la position de masquage et de réduction de traînée A et la position entièrement déployée B selon des positions intermédiaires de pilotage du moteur fusée.

Cette position offre en outre une protection du véhicule contre les effets de l'éclatement du jet.

L'élément de capot comporte pour ce faire des panneaux adaptés à former un écran qui s'oppose à l'éclatement du jet du moteur fusée et à reconcentrer le jet pour accroître la poussée du moteur

Dans cette position on ouvre les pétales en vol hors atmosphère, de façon à accompagner l'éclatement du jet et à augmenter la récupération de poussée.

Cela s'accompagne évidement de la diminution des flux thermiques vers l'arrière du véhicule.

Cette position augmente la poussée du moteur fusée, par augmentation du diamètre de sortie de la tuyère au moyen d'une ouverture adaptée des pétales. Dans cette phase de vol, l'élément de capot est notamment manoeuvrable entre la position de masquage et de réduction de traînée A et la position entièrement déployée B selon des positions de protection thermique de l'arrière de l'engin.

Les pétales forment alors un écran qui protège la partie arrière du véhicule de l'éclatement à haute altitude du jet du moteur fusée, au moins la paroi interne du capot étant à haute résistance thermique soit parce que les éléments de capot sont réalisés dans un matériau à haute résistance thermique soit parce qu'un revêtement résistant à la chaleur du jet recouvre la face interne tournée vers le jet des éléments de capot.

Ceci permet notamment de réduire la masse des protections thermiques nécessaires à l'arrière du véhicule et les pétales du dispositif servent ainsi en position fermée d'appendice aérodynamique et en position ouverte d'écran pare-feu.

C'est un mode de fonctionnement applicable à un avion spatial, aux propulseurs largables ou aux lanceurs réutilisables lors de la montée en propulsion fusée en haute atmosphère ou dans le vide.

Ce fonctionnement correspond à un procédé d'optimisation de la poussée du moteur fusée de l'avion spatial selon lequel on manoeuvre au moins un élément de capot du dispositif selon des positions d'accompagnement de l'éclatement du jet du moteur fusée entre une position de masquage d'une tuyère d'un moteur fusée de l'avion A et une position entièrement déployée B de freinage aérodynamique de l'avion.

La figure 4E correspond à une position de vectorisation de la poussée du moteur fusée.

Il s'agit d'un mode de fonctionnement perfectionné du précédent, où l'ouverture dissymétrique des pétales permet un contrôle vectoriel de la poussée et donc un pilotage de l'aéronef.

Ce mode de fonctionnement s'applique donc évidement aussi pour un avion spatial, pour un propulseur largable ou pour un lanceur réutilisable lors de la montée en propulsion fusée en haute atmosphère ou dans le vide.

En résumé, le dispositif de l'invention permet d'utiliser les pétales pour réaliser des fonctions aérodynamiques externes quand le moteur fusée est inopérant et des fonctions propulsives quand le moteur fusée est opérant

On notera que pour le domaine de vol où le moteur fusée est inopérant, le dispositif interagit avec l'écoulement aérodynamique externe du véhicule
alors que pour le domaine de vol où le moteur fusée est en action, une interaction avec l'écoulement de jet du moteur fusée est recherchée.

Il en découle, que le domaine de vol moteur inopérant concerne la surface externe des pétales, alors que le domaine de vol où le moteur fusée est en action, c'est la surface interne des pétales qui est sollicitée.

Plus précisément ces deux domaines de vol couvrent un certain nombre de fonction système, à savoir pour le premier domaine la réduction de la traînée comme représenté à la figure 4A, la contribution à l'équilibrage longitudinal haute incidence comme représenté à la figure 4B, la stabilisation au voisinage de l'incidence et du dérapage nul comme représenté à la figure 4C en phase trans-sonique et le freinage aérodynamique en approche dans une position des pétales intermédiaires entre les positions des figures 4A et 4C.

Pour le second domaine, les fonctions couvertes par le dispositif de l'invention sont l'accroissement de la poussée par accompagnement de l'éclatement du jet à haute altitude et/ou la vectorisation de poussée, comme représenté en figure 4E, la protection de certaines partie d'arrière corps de l'éclatement du jet du moteur fusée exemples des figures 4D et 4E.

Bien entendu, pour réaliser les modes de fonctionnement de la présente invention, l'aéronef est équipé de sous ensembles complémentaires comportant un ensemble de vérins 6 fixés de façon adéquates entre le fuselage et les panneaux en pétales. Ces vérins, pouvant être hydrauliques ou électriques, sont de manière connue alimentés en énergie et pilotés par des dispositifs de commande.

Les sous ensembles complémentaires comportent en outre un ensemble électronique non représenté de pilotage de la position des pétales, ensemble électronique qui doit être en relation d'un part avec le programme de vol de l'aéronef et d'autre part avec un ensemble de capteurs adéquats apte à définir en temps réel la position de l'aéronef dans l'espace et des panneaux.

Le capot complet ou carénage est selon un mode de réalisation préférentiel composé de 4 pétales selon l'exemple de la figure 3. Ces pétales sont constitués par les panneaux 3a à 3d réalisés en matériaux aptes à supporter les flux thermiques du moteur fusée, comme un inconel, ou des céramique composites par exemple carbone/carbone protégées contre l'oxydation ou carbone/SiC également protégées.

Les pétales réalisés par les panneaux 3a, 3b se déplaçant selon un plan vertical fonctionnent selon les positions décrites plus haut. Les pétales formés par les panneaux 3c, 3d se déplacent selon un plan horizontal et permettent de corriger la trajectoire de l'aéronef en lacet, participent au freinage en position entièrement déployée ou vectorisent la poussée du moteur fusée dans un plan horizontal.

Comme représenté en figure 1, chaque pétale comporte une fixation articulée 5 permettant une liaison avec l'arrière du fuselage de l'avion spatial.

Comme représenté en figure 5, le moteur fusée 2 est inséré dans le fuselage quasiment jusqu'à la section de sortie de la tuyère 4, de façon aussi à réduire la traînée aérodynamique, le moteur fusée étant lui-même un ensemble de géométrie complexe susceptible de créer de la traînée.

Le fuselage se prolonge avantageusement par un capotage annulaire tronconique 10 auquel se raccordent les panneaux ou pétales 3a à 3d.

De retour à la figure 1, chaque pétale comporte également un point de fixation pour un vérin 6 repris sur le fuselage de l'avion spatial de sorte que la manoeuvre du vérin 6 permette une ouverture plus ou moins grande du pétale selon le besoin.

La forme des panneaux réalisant les pétales contribue en elle même à la rigidité de ces pétales et à leur tenu face aux efforts qu'ils subissent.

L'invention permet donc de supprimer les dispositifs de pilotage du moteur fusée et en particulier les vérins et leur source d'énergie, de réduire les protections thermique du fond de l'appareil,
de réduire les gaz nécessaires pour le système de contrôle d'attitude et notamment les petits moteurs fusée qui servent à stabiliser un véhicule dans le vide et de réduire la taille et la masse des systèmes de volets de pilotage de l'avion.

Les figures représentent des fonctions spécifiques simples. Il est bien entendu possible dans le cadre de l'invention de combiner les fonctions et, par exemple, il est possible dans une configuration à quatre pétales de faire du freinage tout en tournant latéralement ou en réglant l'incidence.

C'est l'intérêt d'avoir plusieurs pétales indépendamment pilotables.

L'invention n'est pas limitée à l'exemple représenté et notamment l'élément de capot peut être de section ovale dans le cas où l'engin spatial comporterait deux moteurs ou plus.

## Revendications

1. Dispositif d'arrière corps d'engin spatial (1) pourvu d'au moins un moteur fusée (2) à l'arrière de l'engin comportant un capot comportant des éléments de capot (3, 3a, 3b, 3c, 3d), manoeuvrables et adaptés à prendre une première position, de masquage et de réduction de la traînée arrière de l'engin (A), où ils prolongent le fuselage de l'engin autour d'une tuyère (4) du moteur fusée de l'engin et s'étendent au delà de l'arrière du fuselage de l'engin, et à prendre une seconde position entièrement déployée (B), d'accroissement de traînée aérodynamique de l'engin **caractérisé en ce que** les éléments de capot sont réalisés par des panneaux (3a, 3b, 3c, 3d) courbes disposés en pétales et se refermant autour de la tuyère (4) de l'engin.

2. Dispositif d'arrière corps d'engin spatial selon la revendication 1 **caractérisé en ce que** les éléments de capot (3, 3a, 3b, 3c, 3d) prolongeant le fuselage de l'engin sont articulés (5) sur ledit fuselage.

3. Dispositif d'arrière corps d'engin spatial selon la revendication 1 ou 2 **caractérisé en ce qu'**au moins une partie des éléments de capot (3, 3a, 3b, 3c, 3d) est manoeuvrable par rapport au fuselage au moyen d'un vérin (6).

4. Dispositif d'arrière corps d'engin spatial selon l'une quelconque des revendications 1 à 3 **caractérisé en ce qu'**au moins une partie des éléments de capot (3, 3a, 3b, 3c, 3d) est continûment manoeuvrable entre la position de masquage et de réduction de traînée (A) et la position entièrement déployée (B) selon des positions intermédiaires (C1, C2, C3) de correction de trajectoire de l'engin.

5. Dispositif d'arrière corps d'engin spatial selon l'une quelconque des revendications 1 à 4 **caractérisé en ce qu'**au moins une partie des éléments de capot (3, 3a, 3b, 3c, 3d) est manoeuvrable entre la position de masquage et de réduction de traînée (A) et la position entièrement déployée (B) selon des positions intermédiaires de pilotage du moteur fusée.

6. Dispositif d'arrière corps d'engin spatial selon l'une quelconque des revendications 1 à 5 **caractérisé en ce qu'**au moins une partie des éléments de capot (3, 3a, 3b, 3c, 3d) est manoeuvrable entre la position de masquage et de réduction de traînée (A) et la position entièrement déployée (B) selon des positions de protection thermique de l'arrière de l'engin, au moins la paroi interne du capot étant à haute résistance thermique.

7. Dispositif d'arrière corps d'engin spatial selon l'une quelconque des revendications précédentes **caractérisé en ce que** les panneaux (3a, 3b, 3c, 3d) formant les éléments de capot sont disposés en prolongement du fuselage, s'étendent au delà de l'arrière du fuselage de l'engin et sont manoeuvrables séparément.

8. Dispositif d'arrière corps d'engin spatial selon la revendication 7 **caractérisé en ce que** le capot comporte au moins un panneau généralement supérieur (3a) et un panneau généralement inférieur (3b) adaptés à réaliser un contrôle de l'engin en cabrage et en piqué.

9. Dispositif d'arrière corps d'engin spatial selon la revendication 7 **caractérisé en ce que** le capot comporte au moins deux panneaux généralement latéraux (3c, 3d) adaptés à réaliser un contrôle de l'engin en lacet.

10. Dispositif d'arrière corps d'engin spatial selon l'une quelconque des revendications précédentes **caractérisé en ce que** le capot comporte des panneaux adaptés à former un écran qui s'oppose à l'éclatement du jet du moteur fusée et à reconcentrer le jet pour accroître la poussée du moteur.

11. Engin spatial comportant un dispositif d'arrière corps selon l'une quelconque des revendications précédentes **caractérisé en ce que** l'engin spatial est un avion spatial (11) pourvu de moteurs atmosphériques (9) pour les phases de vol atmosphérique de l'avion.

12. Procédé de correction de trajectoire d'un avion spatial (11) comprenant un dispositif selon l'une quelconque des revendications 1 à 10 **caractérisé en ce qu'**on corrige la trajectoire de l'avion en manoeuvrant au moins un élément de capot (3a, 3b) du dispositif selon des positions intermédiaires (C1, C2, C3) entre une position de masquage d'une tuyère d'un moteur fusée de l'avion (A) et une position entièrement déployée (B) de freinage aérodynamique de l'avion.

13. Procédé d'optimisation de la poussée d'un moteur fusée d'un avion spatial (11) comprenant un dispositif selon l'une quelconque des revendications 1 à 10 **caractérisé en ce qu'**on manoeuvre au moins un élément de capot (3a, 3b) du dispositif selon des positions d'accompagnement de l'éclatement du jet du moteur fusée entre une position de masquage d'une tuyère d'un moteur fusée de l'avion (A) et une position entièrement déployée (B) de freinage aérodynamique de l'avion.

## Patentansprüche

1. Heckkörpervorrichtung für ein Raumfahrzeug (1), das mit mindestens einem Raketenmotor (2) hinter dem Fahrzeug versehen ist, umfassend eine Haube, die Haubenelemente (3, 3a, 3b, 3c, 3d) umfasst, welche dahingehend betätigbar und ausgeführt sind, eine erste Position zum Abdecken und zum Reduzieren des rückwärtigen Luftwiderstands des Fahrzeugs (A) einzunehmen, in der sie den Rumpf des Fahrzeugs um eine Düse (4) des Raketenmotors des Fahrzeugs herum verlängern und sich über das Heck des Rumpfes des Fahrzeugs hinaus erstrecken, und eine zweite vollständig ausgebrachte Position (B) zum Vergrößern des aerodynamischen Luftwiderstands des Fahrzeugs einzunehmen, **dadurch gekennzeichnet, dass** die Haubenelemente aus gekrümmten Platten (3a, 3b, 3c, 3d) hergestellt sind, die blütenblattartig angeordnet sind und sich um die Düse (4) des Fahrzeugs schließen.

2. Heckkörpervorrichtung für ein Raumfahrzeug nach Anspruch 1, **dadurch gekennzeichnet, dass** die Haubenelemente (3, 3a, 3b, 3c, 3d), die den Rumpf des Fahrzeugs verlängern, am Rumpf angelenkt (5) sind.

3. Heckkörpervorrichtung für ein Raumfahrzeug nach Anspruch 1 oder 2, **dadurch gekennzeichnet, dass** mindestens ein Teil der Haubenelemente (3, 3a, 3b, 3c, 3d) mittels eines Zylinders (6) bezüglich des Rumpfes betätigbar ist.

4. Heckkörpervorrichtung für ein Raumfahrzeug nach einem der Ansprüche 1 bis 3, **dadurch gekennzeichnet, dass** mindestens ein Teil der Haubenelemente (3, 3a, 3b, 3c, 3d) kontinuierlich zwischen der Position zum Abdecken und zum Reduzieren von Luftwiderstand (A) und der vollständig ausgebrachten Position (B) in Zwischenpositionen (C1, C2, C3) zur Korrektur der Bahn des Fahrzeugs betätigbar ist.

5. Heckkörpervorrichtung für ein Raumfahrzeug nach einem der Ansprüche 1 bis 4, **dadurch gekennzeichnet, dass** mindestens ein Teil der Haubenelemente (3, 3a, 3b, 3c, 3d) zwischen der Position zum Abdecken und Reduzieren von Luftwiderstand (A) und der vollständig ausgebrachten Position (B) in Zwischenpositionen zum Steuern des Raketenmotors betätigbar ist.

6. Heckkörpervorrichtung für ein Raumfahrzeug nach einem der Ansprüche 1 bis 5, **dadurch gekennzeichnet, dass** mindestens ein Teil der Haubenelemente (3, 3a, 3b, 3c, 3d) zwischen der Position zum Abdecken und Reduzieren von Luftwiderstand (A) und der vollständig ausgebrachten Position (B) in Positionen zum Wärmeschutz des Hecks des Fahrzeugs betätigbar ist, wobei mindestens die Innenwand der Haube einen hohen Wärmewiderstand aufweist.

7. Heckkörpervorrichtung für ein Raumfahrzeug nach einem der vorhergehenden Ansprüche, **dadurch gekennzeichnet, dass** die die Haubenelemente bildenden Platten (3a, 3b, 3c, 3d) als Verlängerung des Rumpfes angeordnet sind, wobei sie sich über das Heck des Rumpfes des Fahrzeugs hinaus erstrecken und getrennt betätigbar sind.

8. Heckkörpervorrichtung für ein Raumfahrzeug nach Anspruch 7, **dadurch gekennzeichnet, dass** die Haube mindestens eine allgemein obere Platte (3a) und eine allgemein untere Platte (3b) umfasst, die dazu ausgeführt sind, eine Nicksteuerung des Fahrzeugs zu realisieren.

9. Heckkörpervorrichtung für ein Raumfahrzeug nach Anspruch 7, **dadurch gekennzeichnet, dass** die Haube mindestens zwei allgemein laterale Platten (3c, 3d) umfasst, die dazu ausgeführt sind, eine Giersteuerung des Fahrzeugs zu realisieren.

10. Heckkörpervorrichtung für ein Raumfahrzeug nach einem der vorhergehenden Ansprüche, **dadurch gekennzeichnet, dass** die Haube Platten umfasst, die dazu ausgeführt sind, eine Abschirmung zu bilden, die dem Zerfall des Strahls des Raketenmotors entgegenwirkt, und den Strahl neu zu fokussieren, um den Schub des Motors zu erhöhen.

11. Raumfahrzeug, das eine Heckkörpervorrichtung nach einem der vorhergehenden Ansprüche umfasst, **dadurch gekennzeichnet, dass** das Raumfahrzeug ein Raumflugzeug (11) ist, das für die atmosphärischen Flugphasen des Flugzeugs mit Saugmotoren (9) versehen ist.

12. Verfahren zur Korrektur der Bahn eines Raumflugzeugs (11), umfassend eine Vorrichtung nach einem der Ansprüche 1 bis 10, **dadurch gekennzeichnet, dass** die Korrektur der Bahn des Flugzeugs durch Betätigung mindestens eines Haubenelements (3a, 3b) der Vorrichtung in Zwischenpositionen (C1, C2, C3) zwischen einer Position zum Abdecken einer Düse eines Raketenmotors des Flugzeugs (A) und einer vollständig ausgebrachten Position (B) zum aerodynamischen Bremsen des Flugzeugs erfolgt.

13. Verfahren zur Optimierung des Schubs eines Raketenmotors eines Raumflugzeugs (11), das eine Vorrichtung nach einem der Ansprüche 1 bis 10 umfasst, **dadurch gekennzeichnet, dass** mindestens ein Haubenelement (3a, 3b) der Vorrichtung in den Zerfall des Strahls des Raketenmotors begleitende Positionen zwischen einer Position zum Abdecken einer Düse eines Raketenmotors des Flugzeugs (A) und einer vollständig ausgebrachten Position (B) zum aerodynamischen Bremsen des Flugzeugs betätigt wird.

## Claims

1. Spacecraft afterbody device (1) provided with at least one rocket motor (2) at the rear of the craft comprising a shroud comprising shroud elements (3, 3a, 3b, 3c, 3d) which are manoeuvrable and are designed to adopt a first shrouding position for reducing the rear drag of the craft (A), in which they extend the fuselage of the craft around a nozzle (4) of the rocket motor of the craft and extend beyond the rear of the fuselage of the craft, and to adopt a second, fully deployed position (B) in order to increase the aerodynamic drag of the craft, **characterized in that** the shroud elements consist of curved panels (3a, 3b, 3c, 3d) which are arranged in the manner of petals and close around the nozzle (4) of the craft.

2. Spacecraft afterbody device according to Claim 1, **characterized in that** the shroud elements (3, 3a, 3b, 3c, 3d) extending the fuselage of the craft are articulated (5) to said fuselage.

3. Spacecraft afterbody device according to Claim 1 or 2, **characterized in that** at least some of the shroud elements (3, 3a, 3b, 3c, 3d) can be manoeuvred with respect to the fuselage by means of an actuator (6).

4. Spacecraft afterbody device according to any one of Claims 1 to 3, **characterized in that** at least some of the shroud elements (3, 3a, 3b, 3c, 3d) can be manoeuvred continuously between the shrouding, drag-reducing position (A) and the fully deployed position (B) by way of intermediate positions (C1, C2, C3) for correcting the trajectory of the craft.

5. Spacecraft afterbody device according to any one of Claims 1 to 4, **characterized in that** at least some of the shroud elements (3, 3a, 3b, 3c, 3d) can be manoeuvred continuously between the shrouding, drag-reducing position (A) and the fully deployed position (B) by way of intermediate positions for piloting the rocket motor.

6. Spacecraft afterbody device according to any one of Claims 1 to 5, **characterized in that** at least some of the shroud elements (3, 3a, 3b, 3c, 3d) can be manoeuvred continuously between the shrouding, drag-reducing position (A) and the fully deployed position (B) by way of positions that provide thermal protection to the rear of the craft, at least the internal wall of the shroud being able to withstand high temperatures.

7. Spacecraft afterbody device according to any one of the preceding claims, **characterized in that** the panels (3a, 3b, 3c, 3d) forming the shroud elements are arranged in the extension of the fuselage, extend beyond the rear of the fuselage of the craft and can be manoeuvred separately.

8. Spacecraft afterbody device according to Claim 7, **characterized in that** the shroud comprises at least one generally upper panel (3a) and one generally lower panel (3b) which are designed to provide pitch control for the craft.

9. Spacecraft afterbody device according to Claim 7, **characterized in that** the shroud comprises at least two generally lateral panels (3c, 3d) which are designed to provide yaw control for the craft.

10. Spacecraft afterbody device according to any one of the preceding claims, **characterized in that** the shroud comprises panels that are designed to form a screen that opposes spreading of the jet of the rocket motor, and to refocus the jet in order to increase the thrust of the motor.

11. Spacecraft comprising an afterbody device according to any one of the preceding claims, **characterized in that** the spacecraft is a spaceplane (11) provided with atmospheric engines (9) for the atmospheric flight phases of the plane.

12. Method for correcting the trajectory of a spaceplane (11) comprising a device according to any one of Claims 1 to 10, **characterized in that** the trajectory of the plane is corrected by manoeuvring at least one shroud element (3a, 3b) of the device by way of intermediate positions (C1, C2, C3), between a position shrouding a nozzle of a rocket motor of the plane (A) and a fully deployed position (B) aerodynamically braking the plane.

13. Method for optimizing the thrust of a rocket motor of a spaceplane (11) comprising a device according to any one of Claims 1 to 10, **characterized in that** at least one shroud element (3a, 3b) of the device is manoeuvred by way of positions accompanying the spreading of the jet of the rocket motor, between a position shrouding a nozzle of a rocket motor of the plane (A) and a fully deployed position (B) aerodynamically braking the plane.
